# EUROPEAN PATENT SPECIFICATION

(11) **EP 1 853 533 B1**
(45) Date of publication and mention of the grant of the patent: **02.07.2008**
(21) Application number: 05719011.8
(22) Date of filing: 24.02.2005
(51) Int. Cl.: C04B 41/50

(54) **METHOD FOR THE CONSOLIDATION OF ORNAMENTAL STONES AND RELEVANT PLANT**
VERFAHREN ZUR KONSOLIDIERUNG VON ZIERSTEINEN UND RELEVANTE ANLAGE
PROCÉDÉ DE CONSOLIDATION DE PIERRES DE DÉCORATION ET ÉQUIPEMENT IDOINE

(43) Date of publication of application: 14.11.2007
(73) Proprietor: Pedrini, Luigi, 24060 Carobbio Degli Angeli (Bergamo) (IT)
(72) Inventor: Pedrini, Luigi, 24060 Carobbio Degli Angeli (Bergamo) (IT)
(74) Representative: Rustichelli, Monica
(86) International application number: PCT/IT2005/000101
(87) International publication number: WO 2006/090415

(56) References cited:
- US-A- 5 597 627
- DATABASE WPI Section Ch, Week 197807 Derwent Publications Ltd., London, GB; Class L02, AN 1978-13017A XP002350370 & JP 50 143812 A (YOKOHAMA RUBBER CO LTD) 19 November 1975 (1975-11-19)

## Description

The present invention relates to a method for the consolidation of ornamental stones, mainly but not exclusively, used in buildings for both floors and coatings, performed by using soluble silicate aqueous solutions. The method is applied while working ornamental stones on both semifinished products and end-items. The invention also relates to the means allowing the consolidation method to be implemented.

The consolidation treatment is required in the plates-like rocky material since its first aim is to seal the rock porosities and fractures and to improve then the semifinished product mechanical properties, particularly the flexural strength and the modulus of elasticity. Moreover, the consolidation allows for example stronger semifinished products to be obtained, suitable to stand all the following working steps exposing the rock at high mechanical stresses to obtain end-items with higher mechanical properties than similar untreated products. Moreover, the treatment aims at improving the ornamental stone appearance by performing an improved polishing, accentuating the rock natural colours.

The prior art comprise several methods for consolidating stones or rocky materials in plates by impregnating them with fluid products or the like; they can be split in two families of methods; the resin impregnation and the silicate aqueous solution impregnation.

The rocky material treatment by means of resins is well known and commonly used. The material to be impregnated can be inserted in a chamber, plunged into the resin and afterwards the chamber is put under pressure to help the resin, usually very viscous, penetrate the material.
The patent DE 3930281 describes a method wherein the resin penetration is obtained by heating the plate material for the full dehydration thereof and afterwards by exhausting the chamber before plunging the plate into the impregnating fluid, the method being completed by the resin catalysis in a furnace.
Other patents, one of the most recent thereof being the US patent application 2004/0076771, describe the plate impregnation method for a repair or aestetical purpose wherein plates are vertically approached with interposed sheets of material absorbing the resin and at least one sheet of plastic material being not concerned by the resin action, all this for the following breakdown of the so-formed block after the impregnation. This impregnation occurs after heating the plates being worked, composing the block in modular equipment which can be made tight, impregnating with the resin at the atmospheric pressure and at a higher pressure, sealing said equipment and controlling the resin absorption during the process by said block of plates.
The use of resins has however a series of disadvantages mainly because they are toxic, polluting, expensive; after being used in a single process they cannot be recycled and they require different devices and subsequent process steps mainly because of the machine and plant staining, of the need to reduce to a minimum the area around the material being treated in order to reduce the resin being used and the cost as well as of the need for very trick steps for approaching and separating the plates from the block of plates being treated.

To remedy these problems water glass solutions are used as a consolidant in the art. The water glass properties of consolidating, proofing and improving the mechanical features of grounds, composed of inorganic powders and rocky materials are well known. Different water glass solution compositions are described in the art according to the material function and kind as well as to the rock configuration. In many cases other substances and compounds are added to the water glass solution, based on the need to control different consolidator parameters such as the solution viscosity, the hardening time, the impermeableness features. The solution impregnation into the material occurs for a higher pressure than the atmospheric pressure.
In fact a method is known in the art by the patent EP 651842 that describes a silicate impregnation for consolidating plates or sheets of rocky material by means of water glass solutions. The impregnation is performed by applying a pressure to the solution, with minimum values from 0.8 Mpa (8 bars) up to, and preferably of, 15 Mpa (150 bars).
However, the use of said method with silicates requires the use of convenient quantities of additives in order not to obtain very long hardening times. Therefore, water glass solutions being used for the impregnation can be used only for limited times, i.e. at the longest one or two days. Moreover, the pressure action, contrary to what has been emphasised in the patent description, does not allow a silicate solidification to be obtained without defects since the gas and steam in the fissures and micro-porosities of the plate being worked, with the high pressure is reduced to micro-cavities in the solidified silicate making the mechanical resistance thereof and subsequently of the impregnated plate lower.

This prior art is subject to many improvements as to the possibility to perform a treatment allowing the rock porosities and fractures to be sealed and thus the semifinished product mechanical properties to be improved, in particular the flexural strength and the modulus of elasticity in order to stand all the working steps exposing the plates at high mechanical stresses.
A further improvement concerns the achievement of end-items with higher mechanical properties than similar untreated products and with such a level that can be hardly found in nature. And not least the treatment improvement allows the ornamental stone aesthetical properties to be improved ensuring a better result of the polishing operation, as well as accentuating the rock natural colours.

From the above it results the need to solve the technical problem of realising a treatment method by impregnation of the natural stone or rocky material plates or slices, allowing the consolidation thereof to be obtained so to overcome the drawbacks of known methods.
Moreover, a main aim of the present treatment is to seal the rock porosities and fractures and thus to improve the semifinished product mechanical properties so as to stand all the following working steps exposing the rock at high mechanical stresses.
Moreover, a further aim is to realise end-items with higher mechanical properties than similar untreated products, as well as to obtain an improved ornamental stone appearance.
Furthermore, a second but not less important aim is to realise water glass solutions to impregnate rocky materials in plates or slices having a higher stability and average life than known solutions.
Finally, last but not least an aim is to realise a plant and specific equipment to implement the consolidation treatment, allowing the treatment to be performed with a sufficient industrial production capacity: i.e. making the treatment steps not only possible but also cheap to perform.

The invention solves said technical problem, by adopting: a consolidation method of plate-like, slice-like or modular-element-like ornamental stones, comprising; the impregnation through the pressure created in the treatment environment by means of a water glass solution wherein the material being treated is plunged for enough time for the full penetration in fissures and micro-porosities of the surface thereof; characterised in that it comprises the following steps:
- A pre-treatment of the material by exhausting;
- A permanence of the pre-treatment step for enough time, after reaching the desired vacuum value, to extract gases, steams and powders existing in said fissures and micro-porosities;
- An injection of the impregnating solution in the same vacuum pre-treatment chamber, with a water glass solution suitable for the lithotype of the rock being treated and for the mechanical-aesthetical object aimed by the impregnation;
- Keeping the treatment chamber under vacuum during the injection;
- An impregnation step being kept for enough time for the solution to penetrate said fissures and micro-porosities always under vacuum.
Moreover, by adopting, in a preferred embodiment: after the impregnation, to a seasoning step of the treated material at a temperature slightly exceeding the room temperature for a length of at least one day.

Further features of the adopted method will be more apparent from the following description and claims.

By adopting, in a preferred embodiment: to a device for the handling and stowage of plate-like, slice-like or modular-element-like ornamental stones, to be used in the consolidation method, comprising; a frame for supporting and seizing a cluster of plate-like, slice-like or modular-element-like materials being worked; characterised in that it has at least a closed structure surrounding the surface side edges of said materials being worked wherein multiple formations of at least three or more fingers are provided on the inner side of said closed shape, aligned and oriented inwards of said closed shape, to define a constant and predetermined distance, based on the surface area of the material being treated, between two adjacent plates, slices or modular elements kept in position between the fingers on said device.
Furthermore, by adopting, in a preferred embodiment: to the device by arranging in a sub-vertical or vertical direction the plates, slices or modular elements.
Further features of the adopted handling and stowage device will be more apparent from the following description and claims.

By adopting, in a preferred embodiment: to a plant for implementing the method for consolidating plate-like, slice-like or modular-element-like ornamental stones in an industrial way with an economically profitable production and yield, characterised in that it comprises:
- A loading/unloading station of the materials being worked comprising at least a handler to pick up and position on a handling and stowage device said materials; at least a conveyor to pick up and handle the material cluster housed on the device from the loading/unloading station towards a pre-treatment and impregnation station;
- At least a vacuum chamber wherein said cluster is housed during the treatment steps; at least one or more extraction means of the air from the vacuum chamber; at least one or more devices for feeding and extracting the impregnating fluid solution in the vacuum chamber.
   Moreover, by adopting, in a preferred embodiment: to at least a seasoning station equipped with one or more controlled-temperature chambers for the full impregnant curing and drying.
   Further features of the adopted plant will be more apparent in the following description and claims.

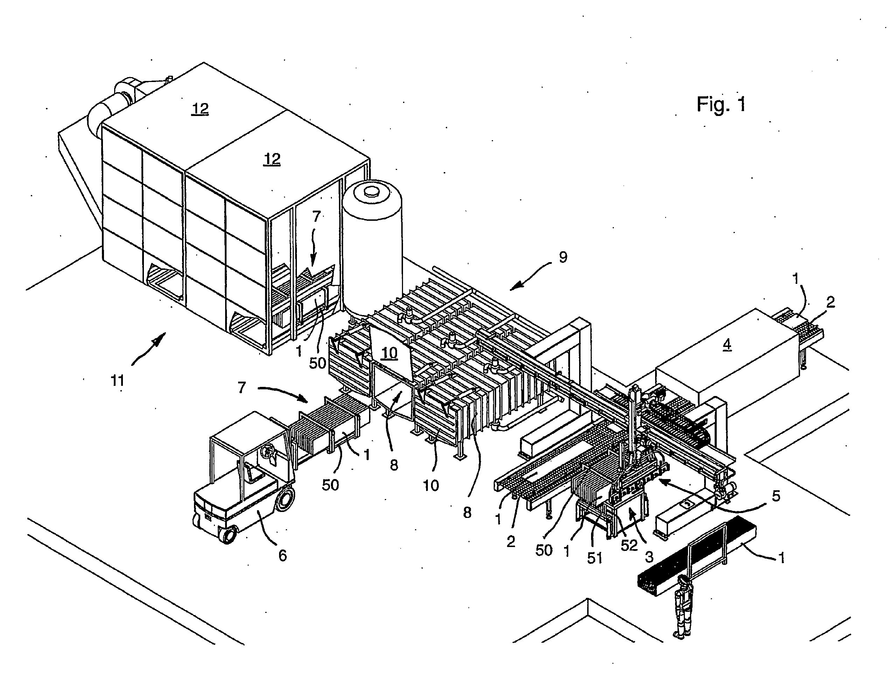

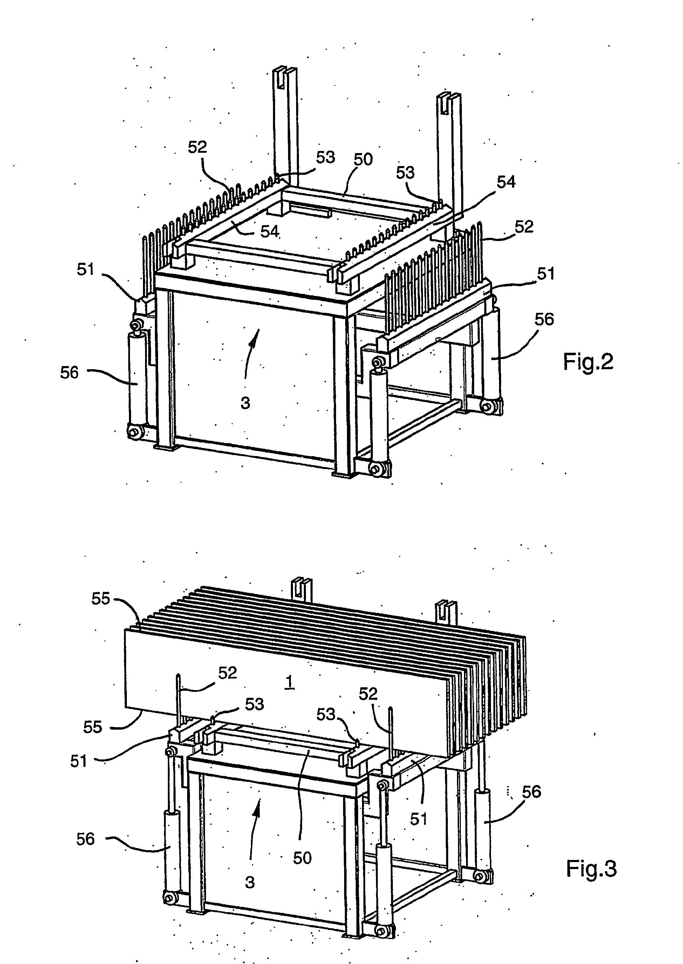

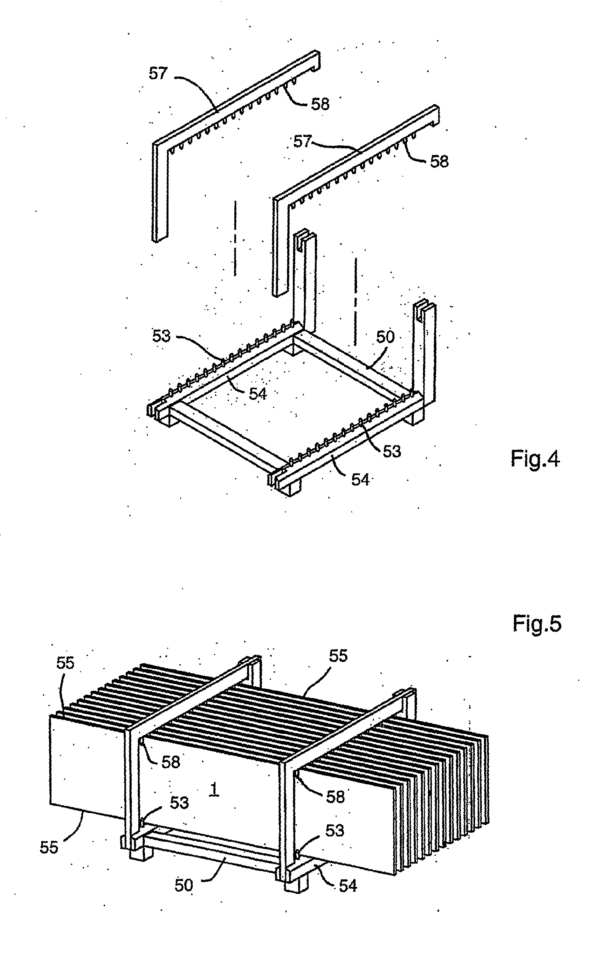

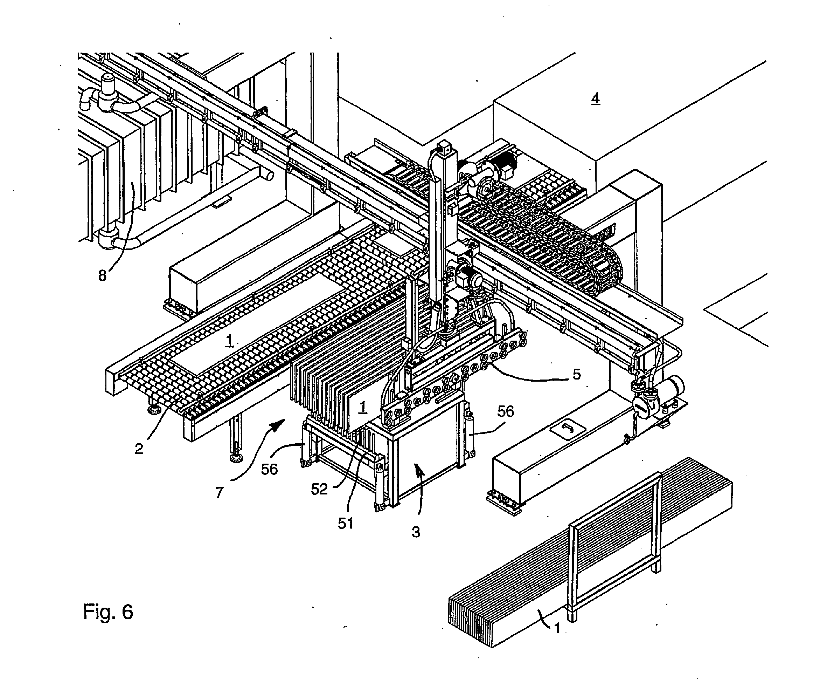

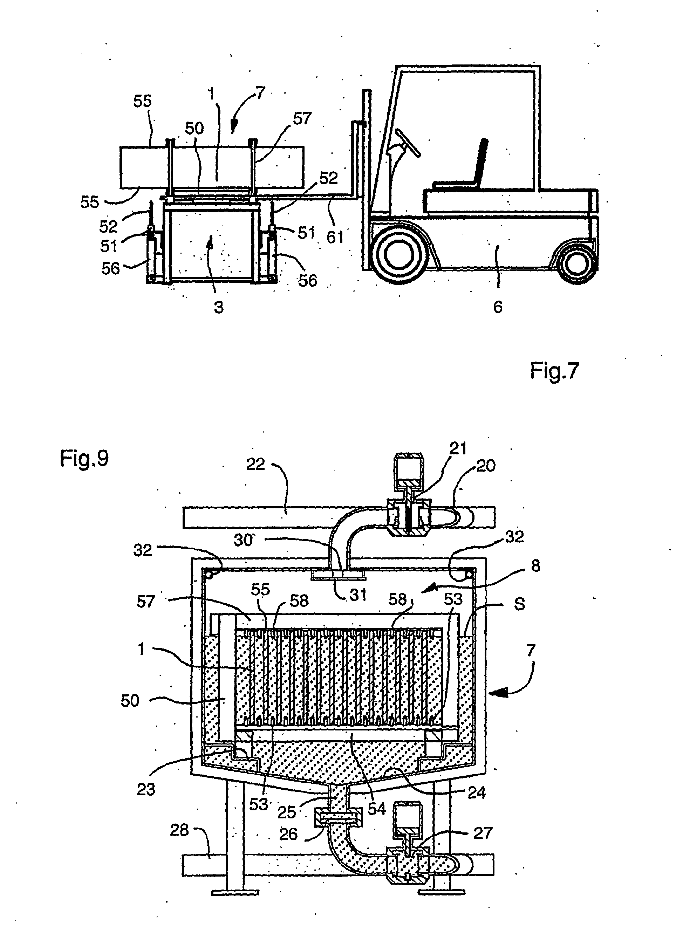

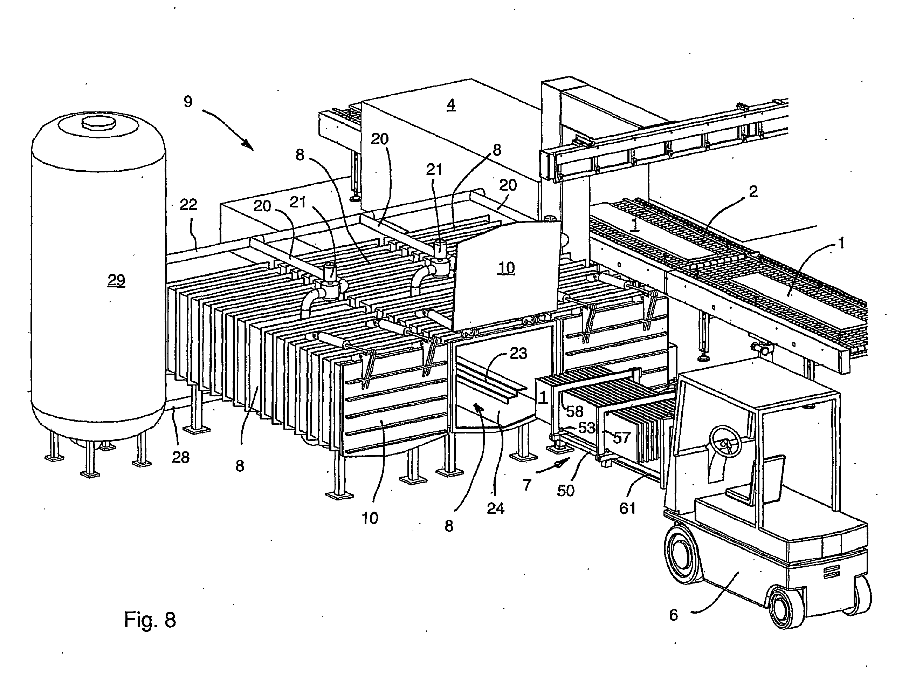

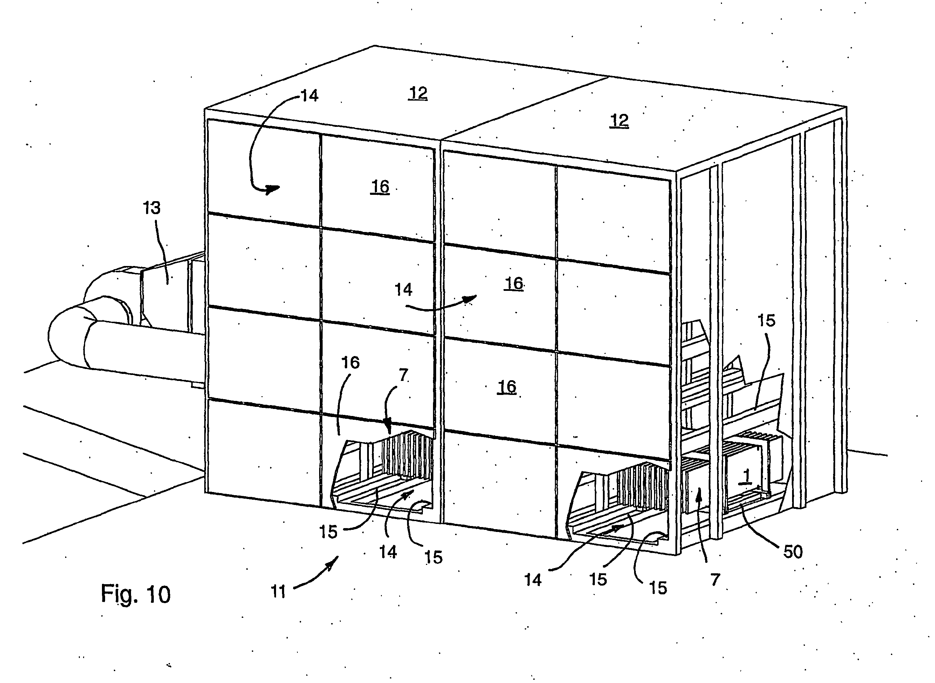

An implementation of the invention is shown, by simple way of example, in the attached seven drawings wherein: Figure 1 is the perspective schematic view of the plant for the consolidation treatment of rocky material plates according to the invention, in this case sized for slices cut from granite blocks; Figure 2 is the perspective schematic view of the composition station of the slice handling frame in the open state for the loading; Figure 3 is the perspective schematic view of the loading station of Figure 2 with slices being already positioned on the still open frame; Figure 4 is the schematic view of a kind of empty frame with the "L"-shaped closing arms; Figure 5 is the schematic view of the closed frame with the slices ready for the handling; Figure 6 is the perspective enlarged view of the loading/unloading station of the slices of the plant of Figure 1; Figure 7 is the side view of the handling of a frame complete of slices; Figure 8 is the perspective enlarged view of the vacuum treatment chamber of figure 1; Figure 9 is the cross section of a vacuum treatment and impregnation chamber during the impregnation step; Figure 10 is the perspective enlarged view of the impregnated slice seasoning chamber, each one with different stowage planes, for the final consolidation of the water glass solution.

Figure 1 shows the different stations of the treatment plant according to the invention wherein the slices 1 comes from the roller table 2 in the plant loading/unloading station 3. Upstream a slice washing and drying chamber 4 is on said roller table before the loading/unloading station. A known suction-cup aerial handler 5 attends to moving the slices 1 from the roller table 2 onto the frame 50 equipped with mobile combs 51 for separating the sides of the slices 1 during the loading. The handler 5 during its motion positions one slice 1 between pairs of comb dents 52 so that they are also separated by pairs of fingers 53 equipping the frame on the supporting beam 54 of the slice edges 55; the combs are operated by actuating cylinders 56 in rising and descending. A truck 6 carries the cluster 7 of slices 1 in the vacuum chamber 8 of the impregnation station 9; a door 10 closes for exhausting each chamber. The following seasoning station 11 has the seasoning chambers 12 wherein the truck 6 handles the slice clusters 7 on the different shelves.

Figure 4 also shows the upper closing "L"-shaped arms 57 of the frame 50 after loading the slices 1. These arms are equipped with fingers 58 stretching out downwards i.e. towards the slice upper edge 55 after closing the frame, as it can be seen in figure 5.
In Figure 7 the truck 6 is equipped with forks 61 extending over the middle of the length of the slices 1 for the lower picking up of the frame 50 with the slice cluster 7.

Vacuum chambers 8, as it can be seen in Figures 8 and 9, of the impregnation area 9 are adjacent and they have an upper duct 20 housing an sectioning solenoid valve 21 for controlling the exhaustion from the main vacuum pipe 22; the frames 50 loaded with the cluster 7 of slices 1 are supported by guides 23 longitudinally to the vacuum chamber 8. The chamber bottom 24 has a "V" shape collecting the water glass solution during the emptying, by means of the duct 25 equipped with a filter for impurities 26 and with an sectioning solenoid valve 27 towards an impregnating solution backflow pipe 28; the solution is stowed in a tank 29. During the treatment the water glass solution is kept at level S, just lower the upper edge 55 of the slices 1. A screen 31 with side openings to avoid the suction of fluid drops or particles protects the vacuum suction mouth 30. The vacuum chamber 8 is equipped with pipes 31 for distributing and spraying the washing water.

The seasoning station 11 of impregnated slices 1 comprises the chamber 12 where warm air is blown in at the required temperature even different between the two shown chambers, the air being produced by the thermal station 13; chambers are split into housings 14 on different shelves wherein the frames 50 with the slice clusters 7 are supported on longitudinal guides 15. The seasoning chambers are closed by a simple lid 16 for each housing in order to handle from the single housings the respective clusters of slices 7 individually.

The treatment method according to the invention comprises a product vacuum pre-treatment step in order to obtain dry and clean materials, clearing the porosities and fractures from dusts and residual gases, in order to ensure the following pervasive penetration of the consolidant and the direct interaction between the consolidant and the minerals composing the rock.
The pre-treatment step consists in a vacuum treatment of the slices 1 positioned in the vacuum chamber 8 which can be used in the following step as an impregnation chamber. The vacuum chamber has a tank with a side opening with a door 10, being both tight. The chamber 8 is connected through the pipe 20 and 22 to one or more pumps, not shown, capable to create in the chamber the desired vacuum level. Advantageously the products are semifinished products, i.e. plates, sheets and unfinished slices and they are positioned on one side in the structure supporting them, the frame 50 and the arms 57, in order to keep them apart at a relative minimum distance helping the impregnating solution to flow between them. The distance is predetermined with respect to the semifinished product surface width. The plates, slices or modular elements are positioned in the frame structure with the greater surfaces so oriented to favour the fluid downflow once the impregnation treatment is finished, preferably vertically or even sub-vertically oriented with an edge or side almost aligned with the bottom 24 of said tank.
The method of the present invention provides in the pre-treatment step to reach a vacuum being lower than 2 mbar, preferably of 0.2-0.3 mbar. The time needed to reach the required vacuum (the envisaged vacuum) varies according to the volume and the typology of the rock to be treated, the rock moisture degree, the cleanliness of the semifinished product surfaces and obviously the features of the pump system being used; the material being treated must be previously cleaned, and eventually washed and dried by means of compressed air jets in chamber 4, in order to remove the residual cutting powders and to be also, as much as possible, dry. The time needed to reach the above-mentioned vacuum degree varies according to the type of rock, being comprised between 2 and 12 hours.

Once the vacuum required in the pre-treatment step is obtained, the impregnation step occurs, controlling the suction of the pumps extracting the air from the vacuum chamber 8; in the plant of figure 1 this operation is performed by the solenoid valve 21 which intercepts and stops the connection of the chamber to the main vacuum pipe 22, being operated by a logic control equipment to keep the required vacuum degree.
The water glass solution is then injected, keeping the absolute pressure in the vacuum chamber 8 low. The solution inlet is favoured by the inner vacuum; the injection control is performed by operating the sectioning solenoid valve 27 of the solution positioned in the feeding pipe 25; in a preferred embodiment of the invention this solenoid valve is operated by a logic control equipment. The fluid is injected from the chamber bottom 24, during the impregnating glass water solution inlet step; the vacuum degree in the chamber, in a preferred embodiment of the method, is such as to favour the boiling and the subsequent water loss from the water glass solution. The steam being released in the vacuum chamber 8 and the pressure exerted by the inlet fluid from the pipe 25 determine the increase in the inner absolute pressure. This pressure in the vacuum chamber is kept in this step at the predetermined value and not exceeding 300 mbar.
Therefore, according to the present invention the materials being treated are vacuum-impregnated, in order to accelerate and help the impregnant to enter the rock porosities, to ensure a pervasive impregnation in the thickness of the plates, slices or modular elements of the cavities and micro-porosities on the surface thereof.
Carrying on the application of the method the inner pressure is kept at a lower value than the atmospheric value, therefore the solution injection is actually vacuum-performed. Preferably this fluid inlet operation is directly controlled according to the vacuum degree in the chamber operating for example at a constant absolute pressure value comprised between 10 and 100 mbar.

The level S of the impregnating solution in the vacuum chamber 8 must be such as not to exceed the upper edge 55 of the slices being treated, i.e. to reach then a level just below said upper edge. The tests being performed confirmed that this is a trick enormously helping the impregnant to enter the rock contributing to a reduction of the overall treatment times.
The vacuum chamber 8 must be left closed for enough time so that the process continues by capillarity and the impregnation occurs homogeneously. Preferably the vacuum level is kept constant close to the steam pressure level of the solution being used, however within the range of 10 and 50 mbar in order to optimise the treatment times. A time interval considerably varying between 4 and 24 hours has been detected while performing the impregnation steps.
The treatment ends by increasing the vacuum chamber absolute pressure up to the atmospheric pressure, emptying the solution with an extraction device not being shown. In a preferred embodiment the same injection device is used for extracting the impregnating fluid, i.e. the pipes 25 and 28, the solenoid valve 27 and the filter 26, trapping impurities. At this point the materials being treated are extracted from the vacuum chamber 8.
The so-emptied vacuum chamber is washed only with water, which is sprayed by the pipes 32 in the chamber 8 being emptied of the slice cluster 7, in order to allow the silicate residues to be removed and the following cycle to be performed. The drainage of the solution first and of the washing water then is performed by a suitable device of the vacuum chamber 8, which can be different from the "V"-shaped bottom 24 being shown. The washing water can be easily discharged, being it inert.
The impregnating solution can be used several times taking care to verify the component percentages and not to use it as opacity appears, since it indicates the separation of a new phase.
In a preferred embodiment of the present invention, the method continues with a following seasoning step performed by thermal treatment in a controlled-temperature chamber, i.e. in the seasoning chamber 12 of the seasoning station 11. Temperatures are kept constant in chamber 12 and advantageously different from each other, however such as not to expose the material to thermal stresses, ensuring the heating and the progressive dehydration of the silicate binder impregnated in the rock. The seasoning preferably occurs at a temperature comprised between 40 and 60°C and in controlled relative moisture conditions, preferably comprised between 40-75% UR. The seasoning time is needed for the impregnant to effectively act considerably increasing the mechanical properties of the rocky material being treated. The times being detected during the test, although not binding, varies between 1 and 7 days for optimum results. In any case it has been checked that too long seasoning or permanency times, even 28 days, after the treatment lead in some ornamental stones a light decrease in the achieved benefits.

The present invention also comprises the possibility of more applications of the same water glass solution or of different water glass solutions on the same cluster of semifinished products or materials with aims, which can be different according to the typology of the ornamental rock being treated.
More cycles alternated with seasoning steps can be performed for the following aims:
a) Act in a targeted way according to the structural aspect, particularly according to the lithotype porosities and/or fracture degree;
b) Accentuating the treatment chromatic effects; the following applications can then be performed with the same impregnant formulation suitable for the lithotype to be treated.

In the case of multiple applications, chosen in a targeted way according to the structural aspect, the following applications can be distinguished:
al) rock with small closed fractures without rough porosity; in that case more applications of the same formulation can ensure both the pervasive impregnation and the consolidation of the existing fractures;
a2) rock with middle-sized fractures or with variable-sized fractures up to open fractures, and pore radius less than 1mm; in that case two or more applications with two different aims are suggested: firstly to consolidate in a pervasive way the rock sound portion, the one without fractures arid less than 1mm porosities; secondly to seal the fractures with a tackier and more viscous consolidant better adhering to the rock and particularly to the consolidant layer left by the previous application.

The second treatment adheres more to the porosities both because of the different physical properties thereof, particularly the higher viscosity and stickiness, and because it tends to adhere to the water glass layer formed in the previous application creating necks and bridges in the porosities. The sealing power of the second treatment is thus increased by the previous treatment.
The second application can be performed with very viscous and sealing solutions also produced by adding in-suspension and/or in-solution charges. In some cases the addition of suitable quantities of charges reduces to one or few applications the solution average life but the charge addition can be required for an application aimed to fractured and/or porous rocks. It is possible to add charges in calcite suspension or aluminous cement. In the-solution additives can be added in lower quantities, chosen between the several curing agents existing for water glass solutions, than a limit value varying with the silicate formulation. More concentrated curing agent solutions can be applied apart as a stabilising and reactive treatment of the silicate impregnant to accelerate hardening times and increase the silicate impregnant resistance to moisture and water in the pores.

The above-described method is applied to end-items or to semifinished products, i.e. to rock pieces obtained by cutting a block in any shape being functional to the following working. The consolidation treatment can involve one or more working stages intervening on semifinished products from raw to almost finished. For example semifinished products being about 5-40 mm thick can be treated, in the step preceding the final working of the production of polished floor tiles. The technique can be applied on semifinished products with a different surface width (even large-sized semifinished products such as plates) and thickness (5-40mm), meeting the requirements of the different kinds of working and final application of the product. Moreover it is possible to apply the process several times, even in different semifinished product working stages.

A further aspect of the present invention relates to the formulation of the more suitable impregnant for the different lithotypes, to the chemical composition and structural aspect thereof.
From tests carried out it has been detected that a formulation being suitable for a single pervasive treatment in the cases of less porous sound stones without fractures, i.e. type a1), or suitable for a first treatment in the cases of fractured and porous stones, i.e. type a2), is particularly effective on fine-medium-grained granite stones, like granites commercially known as "Sardinian White" and "Imperial White", or variable-grained like the migmatite "Multicolor", i.e. all with a quartzose-feldspathic composition up to labradorithic compositions, is formulated by the following three components:
A) Sodium waterglass (with a ratio SiO₂/Na₂O comprised between 1.8 and 3.8, preferably comprised between 3.0 and 3.5, and solids comprised between 25 and 50% by weight, preferably comprised between 30 and 40%) in the percentage comprised between 40 and 80% by weight;
B) Potassium waterglass (with a ratio SiO₂/K₂O comprised between 0.6 and 2.2, preferably comprised between 0.6 and 1.0, and solids comprised between 35 and 50% by weight, preferably comprised between 45 and 50%) in the percentage comprised between 20 and 50% by weight;
C) H₂O in the percentage comprised between 0 and 25% by weight.
The most effective silicate mixture in water solution, and the first or single impregnation treatment of "granite"-like rocks is, as above described, a sodium potassium mixture with a higher concentration of sodium solution.

In the wide range of rocks included in the granite commercial category, it has been found out that for rocks with a more basic composition, such as for example fine-grained very compact basalt having a high initial mechanical resistance, like the ones commercially known as "Absolute Black", the most effective treatment is performed with a solution being more rich in potassium and very fluid, comprising potassium waterglass (with a ratio SiO₂/K₂O comprised between 0.6 and 1, preferably of 0.6, and solids comprised between 40 and 50% by weight, preferably comprised between 45 and 50%) in the percentage comprised between 80 and 100% by weight and water comprised between 0 and 20%.

From tests carried out it has been detected that for application following the first one, i.e. in the case of multiple applications requiring the application of a viscous solution (150-500 mps a 20°C) with a slightly sealing effect, the solutions with the higher binding power are composed of sodium silicate (with a ratio SiO₂/Na₂O comprised between 3.2 and 4.0, and solids comprised between 30 and 35% by weight) in the percentage of 100% by weight.
The viscosity and the sealing power of this solution can be increased by adding in-suspension charges for applications aimed to rocks with a high degree of porosity and fracture.

Compositions being richer in potassium silicate have a higher consolidating effect if the thermal seasoning is performed at a higher temperature. Solutions only containing potassium silicate with SiO₂/K₂O comprised between 0.6 and 1, and solids comprised between 40 and 50% by weight require seasoning temperatures exceeding 50°C, and preferably of 60°C.

In carrying out the tests, it has been verified that water glass solutions used to deeply consolidate ornamental stones, besides improving the mechanical properties thereof, also offer considerable aesthetical benefits such as: more brightness, more purity and natural colour definition. This effect being never described before and absolutely unexpected is particularly advantageous since it allows two significant features of ornamental rock to be improved in a single treatment: the mechanical resistance thereof, so to realise thin coating plates and the appearance thereof with a considerable improvement of the surface aesthetical values

From tests carried out, the impregnating silicate penetration resulted of about 5-6 mm in the thickness of a 30 mm thick plate.

The operation of the plant as described and represented in the figures is already apparent from the above description of the method. It is still to specify that the fingers 53, 58 equipping the frame 50 and the "L" closing arms for the whole method duration, support the cluster 7 of slices 1. These fingers are positioned to keep the slices apart at a minimum distance, but sufficient for the impregnating fluid so that it can penetrate between the facing surfaces and act under the effect of the applied pressures. Said distance is also calculated based on the fluid viscosity at the end of the impregnation in order to let the fluid drip, i.e. the surplus water glass solution, releasing the slices 1 being treated. The "L" arms are connected to the frame by known dissolvable mechanical joints, not shown for simplicity, they are clamped to the composition of the slice cluster 7 and they are open at the end of the slice extraction method.

The advantages obtained by this invention are: the treatment method allows the rock porosities and fractures to be sealed and then the end-item, and advantageously the semifinished product mechanical properties to be improved, particularly improving the flexural strength and the modulus of elasticity. The achievable consolidation allows for example more resistant semifinished products to be realised, i.e. suitable to stand all the following working steps which very often expose the rock at high mechanical stresses.
The repetition of the impregnation steps, with the same aims or with different aims in the different steps, allows the mechanical features to be gradually improved even by more than twice the mechanical features of the initial rock.
The so-realised end-items show higher mechanical properties than similar untreated products.
Moreover, the consolidation treatment allows the ornamental stone aesthetical properties to be improved ensuring a better result for the polishing operation, accentuating the rock natural colours and for the different surface aspect since the porosities and the fissures are sealed, just as it is possible to add also some pigment to the solution or coloured charged material for embellishment purposes.
The present invention thus links to the rock consolidation advantages a clear embellishment effect of the rock being worked.

In the present invention the main advantages, with respect to the prior art, are achieved because the exhaustion process, representing the device favouring the natural fluid infiltration by capillarity, is performed with very high vacuum values in a different pre-treatment step, requiring the application of a negative pressure lower than predetermined impregnation values. In this pre-treatment the certain removal of powders, absorbed gas and excess of humidity from the porosities is achieved, contrary to the prior art described in the patent EP 651842 wherein said inclusions are compressed and incorporated in micro-cavities in the consolidated silicate material.
The impregnating solution based on water glass solutions can be also used for some hundreds of impregnations, only previously visually controlling the transparency and the component concentration.
A further advantage with respect to the prior art is the fact of comprising also a seasoning step of the impregnated semifinished materials, to be implemented according to the kind of consolidant and of the chemical, physical and morphological features of the material being treated, i.e. the lithotype. In fact, it has been verified that the seasoning allows the mechanical properties to be considerably increased with respect to the only-impregnated semifinished product.
From tests carried out, an improvement of the production yield has been detected, with a reduction of the scraps from breaking by 60%.
In the practical implementation, the materials, sizes, execution details could be different from the indicated ones, but technically similar thereto, without departing from the juridical scope of the present invention as defined by the claims.

## Claims

1. A method for consolidating plate-like, slice-like or modular-element-like ornamental stones comprising: the impregnation by means of the pressure created in the treatment environment with a water glass solution wherein the material being treated is plunged for enough time for the full penetration in fissures and micro-porosities of the surface thereof; **characterised in that** it has the following steps:
- A pre-treatment of the material by exhausting;
- A permanence of the pre-treatment step for enough time, after reaching the desired vacuum value, to extract gases, steams and powders existing in said fissures and micro-porosities;
- An injection of the impregnating solution in the same vacuum pre-treatment chamber, with a water glass solution suitable for the lithotype of the rock being treated and for the mechanical-aesthetical object aimed by the impregnation;
- Keeping the treatment chamber under vacuum during the injection;
- An impregnation step being kept for enough time for the solution to penetrate said fissures and micro-porosities always under vacuum.

2. A method according to claim 1, wherein the pre-treatment step occurs with an absolute pressure lower than 2 mbar, preferably lower than 0.2-0:3 mbar.

3. A method according to claim 1, wherein the injection step occurs with an absolute pressure lower than 300 mbar.

4. A method according to claim 3, wherein the injection step occurs with an absolute pressure comprised between 10 and 100 mbar.

5. A method according to claim 1, wherein the impregnation step occurs at an absolute pressure close to the steam pressure level of the impregnating solution being used, however comprised between 10 and 50 mbar.

6. A method according to claim 1, wherein after the impregnation a seasoning step of the material being treated is provided, at a temperature slightly exceeding the room temperature for a length of at least 1 day.

7. A method according to claim 1, wherein the impregnating solution level is kept in the impregnation chamber just below the upper edge of the material being treated.

8. A method according to claim 1, providing multiple impregnations being consecutive or intercalated in different working steps of the plate-like, slice-like or modular-element-like rocky materials.

9. A method according to claim 8, wherein multiple impregnations are provided for different consolidation or aesthetical embellishment aims using water glass solutions with different compositions in the different impregnations.

10. A method according to claim 1, wherein the water glass solution for the application as an impregnating fluid comprises:
A) sodium waterglass (with ratio SiO₂/Na₂O comprised between 1.8 and 3.8, preferably comprised between 3.0 and 3.5, and solids comprised between 25 and 50% by weight, preferably comprised between 30 and 40%) in the percentage comprised between 40 and 80% by weight;
B) potassium waterglass (with ratio SiO₂/K₂O comprised between 0.6 and 2.2, preferably comprised between 0.6 and 1.0, and solids comprised between 35 and 50% by weight, preferably comprised between 45 and 50%) in the percentage comprised between 20 and 50% by weight;
C) H₂O in the percentage comprised between 0 and 25% by weight.

11. A method according to claim 1, wherein the water glass solution, for the application as impregnating fluid, comprises: potassium waterglass (with ratio SiO₂/K₂O comprised between 0.6 and 1, preferably of 0.6, and solids comprised between 40 and 50% by weight, preferably comprised between 45 and 50%) in the percentage comprised between 80 and 100% by weight and water comprised between 0 and 20%.

12. A method according to claim 1, wherein the water glass solution, for the application as impregnating fluid, comprises: sodium silicate (with ratio SiO₂/Na₂O comprised between 3.2 and 4.0, and solids comprised between 30 and 35% by weight) in the percentage of 100% by weight.

13. A method according to claim 1, wherein the water glass solution, for the application as impregnating fluid, comprises: potassium silicate with ratio SiO₂/K₂O comprised between 0.6 and 1, and solids comprised between 40 and 50% by weight.

14. A plant for the application of the method for consolidating plate-like, slice-like (1) or modular-element-like ornamental stones, according to claims 1 to 13 in an industrial way with an economically profitable production and yield, **characterised in that** it comprises:
- A loading/unloading station (3) of the materials being worked comprising at least a handler (5) to pick up and position on a handling and stowage device (50) said materials; at least a conveyor (6) to pick up and handle the material cluster (7) housed on the device from the loading/unloading station towards a pre-treatment and impregnation station (9);
- At least a vacuum chamber (8) wherein said cluster (7) is housed during the treatment steps; at least one or more extraction means of the air from the vacuum chamber; at least one or more devices for feeding and extracting the impregnating fluid solution in the vacuum chamber.

15. A plant according to claim 14, comprising at least a seasoning station equipped with one or more controlled-temperature chambers for the full impregnant curing and drying.

16. A plant according to claim 14, wherein the conveyor (6) has long forks (61) to seize the device in the direction of the length of said materials (1).

17. A plant according to claim 14, wherein the loading/unloading station (3) is preceded by a washing and/or drying chamber (4) of the material (1) to be treated.

18. A plant according to claim 14, wherein the vacuum chamber (8) has a parallelepiped configuration and the loading/unloading on a side lower base; this base is closed by a lid (10) during the treatment.

19. A plant according to claim 14, wherein the vacuum chamber (8) is connected with the vacuum equipment in the upper part.

20. A plant according to claim 14, wherein the vacuum chamber (8) is connected with the injection equipment of the impregnating fluid solution from bottom.

21. A plant according to claim 14, wherein the connection pipe (20) of the vacuum equipment is intercepted by a sectioning solenoid valve (21), to check and control the vacuum delivery.

22. A plant according to claim 14, wherein the connection pipe (25) of the impregnant injection equipment is intercepted by a sectioning solenoid valve (27), to check and control said impregnating fluid delivery.

23. A plant according to claim 14, wherein the vacuum chamber (8) is equipped with an impregnating fluid drainage device at the end of the impregnation.

24. A plant according to claim 23, wherein the bottom (24) of the vacuum chamber is "V"-shaped.

25. A plant according to claim 14, wherein the impregnating fluid solution feeding and extraction devices in the vacuum chamber comprise at least a filtering device (26) for the impurities in the impregnating solution.

26. A plant according to claim 14, wherein the vacuum chamber (8) has a washing device (32) at the end of the impregnation step of the impregnating fluid solution residues.

27. A plant according to claim 26, wherein the washing device is composed of pipes (32) to deliver and spray the washing water in the vacuum chamber (8).

28. A plant according to claim 14, wherein the devices form feeding and extracting the impregnating fluid solution in the vacuum chamber comprise at least a solution stowage tank (29).

29. A plant according to claim 21, wherein said sectioning solenoid valve (21) on the vacuum pipe (20) is controlled by a logic control equipment to keep the required vacuum degree.

30. A plant according to claim 22, wherein said sectioning solenoid valve (27) on the pipe of the impregnant inlet pipe (25) is controlled by a logic control equipment.

31. A plant according to claim 15, wherein the seasoning chamber is equipped with longitudinal guides (15) to house the device with the plate-like, slice-like or modular-element-like material cluster positioned on more planes.

32. A plant according to claim 14, wherein is present a device at least for the handling and stowage of plate-like, slice-like or modular-element-like ornamental stones, comprising: a frame (50) for supporting and seizing a cluster (7) of plate-like, slice-like (1) or modular-element-like materials being worked; **characterised in that** it has at least a closed structure (50, 54, 57) surrounding the surface side edges (55) of said materials being worked wherein multiple formations of at least three or more fingers (53, 58) are provided on the inner side of said closed shape, aligned and oriented inwards of said closed shape, to define a constant and predetermined distance, based on the surface area of the material being treated, between two adjacent plates, slices (1) or modular elements kept in position between the fingers on said device.

33. A plant according to claim 32, wherein the arrangement of the plates, slices or modular elements in the device is in a sub-vertical or vertical direction.

34. A plant according to claim 33, wherein said closed structure of the device is composed of at least an upper arm (57) with fingers (58) aligned to corresponding fingers (53) on the beams (54) of the frame (50) for the device seizing and handling.

35. A plant according to claim 33, wherein the device loading/unloading handling is performed in a material handling station (3) and it has a spacer device (51, 52) of said materials interposed during the loading/unloading steps with the open device.

36. A plant according to claim 35, wherein the spacer device is composed by a plurality of dents (52) and it is operated by actuator means (56) by means of a single comb (51) or even by means of actuator means of single dent or by pairs.

37. A plant according to claim 33, wherein the frame (50) of the handling and stowage device has lower openings for the passage of picking up by forks (61) of a conveyor (6) on both sides.

## Patentansprüche

1. Verfahren zum Konsolidieren von plattenartigen, scheibenartigen oder modularelementartigen Ziersteinen, umfassend: die Imprägnierung mittels des in der Behandlungsumgebung erzeugten Druckes mit einer Wasserglaslösung, in welche das zu behandelnde Material für eine Zeitspanne eingetaucht wird, die für das vollständige Eindringen in Fissuren und Mikroporen der Oberfläche des Materials ausreicht, **dadurch gekennzeichnet, dass** es die folgenden Schritte aufweist:
- Eine Vorbehandlung des Materials durch Entgasen;
- Ein Andauern des Vorbehandlungsschrittes für eine ausreichend lange Zeit nach Erreichen des gewünschten Vakuumwertes, um in den besagten Fissuren und Mikroporen existierende Gase, Dämpfe und Stäube zu extrahieren;
- Ein Einspritzen der Imprägnierlösung in die gleiche Vakuum-Vorbehandlungs-Kammer, mit einer Wasserglaslösung, die für den Lithotyp des zu behandelnden Gesteins und für das mechanischästhetische Ziel, auf welches die Imprägnierung ausgerichtet ist, geeignet ist;
- Halten der Behandlungskammer unter Vakuum während des Einspritzens;
- Ein Imprägnierschritt, welcher so lange anhält, dass die Lösung stets unter Vakuum in die besagten Fissuren und Mikroporen eindringen kann.

2. Verfahren nach Anspruch 1, wobei der Vorbehandlungsschritt bei einem absoluten Druck von weniger als 2 mbar, vorzugsweise weniger als 0,2 - 0,3 mbar, erfolgt.

3. Verfahren nach Anspruch 1, wobei der Einspritzschritt bei einem absoluten Druck von weniger als 300 mbar erfolgt.

4. Verfahren nach Anspruch 3, wobei der Einspritzschritt bei einem absoluten Druck zwischen 10 und 100 mbar erfolgt.

5. Verfahren nach Anspruch 1, wobei der Imprägnierschritt bei einem absoluten Druck erfolgt, welcher nahe an dem Dampfdrucklevel der verwendeten Imprägnierlösung liegt, welcher jedoch zwischen 10 und 50 mbar liegt.

6. Verfahren nach Anspruch 1, wobei nach der Imprägnierung ein Alterungsschritt des zu behandelnden Materials wenigstens für die Dauer eines Tages vorgesehen ist, und zwar bei einer Temperatur, die leicht über der Raumtemperatur liegt.

7. Verfahren nach Anspruch 1, wobei das Niveau der Imprägnierlösung in der Imprägnierkammer gerade unterhalb der Oberkante des zu behandelnden Materials gehalten wird.

8. Verfahren nach Anspruch 1, welches mehrfache Imprägnierungen der plattenartigen, scheibenartigen oder modularelementartigen Gesteinsmaterialen vorsieht, wobei diese aufeinanderfolgen oder in verschiedene Arbeitsschritte eingebunden sein können.

9. Verfahren nach Anspruch 8, bei welchem mehrere Imprägnierungen für unterschiedliche Konsolidierungs- oder ästhetische Verzierungszwecke vorgesehen sind, wobei bei den unterschiedlichen Imprägnierungen Wasserglaslösungen mit unterschiedlichen Zusammensetzungen verwendet werden.

10. Verfahren nach Anspruch 1, wobei die Wasserglaslösung für die Anwendung als ein Imprägnierfluid umfasst:
A) Natronwasserglas (mit einem Verhältnis SiO₂/Na₂O zwischen 1,8 und 3,8, vorzugsweise zwischen 3,0 und 3,5, und Feststoffen mit einem Massenanteil von 25 bis 50 %, vorzugsweise 30 bis 40 %) mit einem Massenanteil von 40 bis 80 %;
B) Kaliumwasserglas (mit einem Verhältnis SiO₂/K₂O zwischen 0,6 und 2,2, vorzugsweise zwischen 0,6 und 1,0, und Feststoffen mit einem Massenanteil von 35 bis 50 %, vorzugsweise 45 bis 50 %) mit einem Massenanteil von 20 bis 50 %;
C) H₂O mit einem Massenanteil zwischen 0 und 25 %.

11. Verfahren nach Anspruch 1, wobei die Wasserglaslösung für die Anwendung als Imprägnierfluid umfasst: Kaliumwasserglas (mit einem Verhältnis SiO₂/K₂O zwischen 0,6 und 1, vorzugsweise 0,6, und Feststoffen mit einem Massenanteil von 40 bis 50 %, vorzugsweise 45 bis 50 %) mit einem Massenanteil von 80 bis 100 % und Wasser zwischen 0 und 20 %.

12. Verfahren nach Anspruch 1, wobei die Wasserglaslösung für die Anwendung als Imprägnierfluid umfasst: Natronwasserglas (mit einem Verhältnis SiO₂/Na₂O zwischen 3,2 und 4,0, und Feststoffen mit einem Massenanteil von 30 bis 35 %) mit einem Massenanteil von 100%.

13. Verfahren nach Anspruch 1, wobei die Wasserglaslösung für die Anwendung als Imprägnierfluid umfasst: Kaliumwasserglas mit einem Verhältnis SiO₂/K₂O zwischen 0,6 und 1, und Feststoffen mit einem Massenanteil von 40 bis 50 %.

14. Eine Anlage für die Anwendung des Verfahrens der Konsolidierung von plattenartigen, scheibenartigen (1) oder modularelementartigen Ziersteinen nach den Ansprüchen 1 bis 13 auf industrielle Weise mit ökonomisch profitabler Produktion und Gewinn, **dadurch gekennzeichnet, dass** sie umfasst:
- Eine Belade-/Entladestation (3) für die zu bearbeitenden Materialien, umfassend wenigstens ein Handhabungselement (5), um besagte Materialien aufzunehmen und auf einer Förder- und Ladevorrichtung (50) zu positionieren; wenigstens ein auf der Vorrichtung angeordnetes Fördergerät (6), um den Materialcluster (7) von der Belade-/Entladestation in Richtung auf eine Vorbehandlungs- und Imprägnierstation (9) aufzunehmen und zu befördern;
- Wenigstens eine Vakuumkammer (8), in der besagter Cluster (7) während der Behandlungsschritte angeordnet ist; wenigstens ein oder mehrere Extraktionsmittel von Luft aus der Vakuumkammer; wenigstens eine oder mehrere Vorrichtungen zum Zuführen und Abführen der Imprägnierfluid-Lösung in die/aus der Vakuumkammer.

15. Anlage nach Anspruch 14, umfassend wenigstens eine Alterungsstation, welche mit einer oder mehreren temperaturkontrollierten Kammern für die vollständige Aushärtung und Trocknung des Imprägniermittels ausgerüstet ist.

16. Anlage nach Anspruch 14, wobei das Fördergerät (6) lange Gabeln (61) aufweist, um die Einheit in Richtung der Länge besagter Materialien (1) aufzunehmen.

17. Anlage nach Anspruch 14, wobei der Belade-/ Entladestation (3) eine Wasch- und/oder Trockenkammer (4) für das zu behandelnde Material (1) vorangestellt wird.

18. Anlage nach Anspruch 14, wobei die Vakuumkammer (8) die Struktur eines Parallelepipeds aufweist und der Belade-/Entladebereich an einer seitlichen, tieferen Basis angeordnet ist, wobei diese Basis während der Behandlung mittels einer Klappe (10) geschlossen ist.

19. Anlage nach Anspruch 14, wobei die Vakuumkammer (8) im oberen Teil mit der Vakuumapparatur verbunden ist.

20. Anlage nach Anspruch 14, wobei die Vakuumkammer (8) von unten mit der Einspritzapparatur für die Imprägnierfluidlösung verbunden ist.

21. Anlage nach Anspruch 14, wobei die Verbindungsleitung (20) der Vakuumapparatur durch ein unterteilendes Magnetventil (21) unterbrochen ist, um die Vakuumzufuhr zu überprüfen und zu regeln.

22. Anlage nach Anspruch 14, wobei die Verbindungsleitung (25) der Imprägniereinspritzapparatur durch ein unterteilendes Magnetventil (27) unterbrochen ist, um die besagte Imprägnierfluidzufuhr zu überprüfen und zu regeln.

23. Anlage nach Anspruch 14, wobei die Vakuumkammer (8) am Ende der Imprägnierung mit einer Imprägnierfluid-Abflussvorrichtung ausgerüstet ist.

24. Anlage nach Anspruch 23, wobei der Boden (24) der Vakuumkammer V-förmig ist.

25. Anlage nach Anspruch 14, wobei die Vorrichtungen zum Zuführen und Abführen der Imprägnierfluidlösung in die/aus der Vakuumkammer mindestens eine Filtervorrichtung (26) für die Verunreinigungen in der Imprägnierlösung umfasst.

26. Anlage nach Anspruch 14, wobei die Vakuumkammer (8) am Ende des Imprägnierschrittes eine Waschvorrichtung (32) für die Rückstände der Imprägnierfluidlösung aufweist.

27. Anlage nach Anspruch 26, wobei die Waschvorrichtung aus Leitungen (32) für die Zufuhr und das Versprühen des Waschwassers in der Vakuumkammer (8) besteht.

28. Anlage nach Anspruch 14, wobei die Vorrichtungen zum Zuführen und Abführen der Imprägnierfluidlösung in die/aus der Vakuumkammer wenigstens einen Lösungs-Lagertank (29) umfassen.

29. Anlage nach Anspruch 21, wobei besagtes unterteilendes Magnetventil (21) an der Vakuumleitung (20) durch eine Logikregeleinrichtung geregelt wird, um das erforderliche Vakuumniveau zu halten.

30. Anlage nach Anspruch 22, wobei besagtes unterteilendes Magnetventil (27) an der Leitung der Imprägniermitteleinlassleitung (25) durch eine Logikregeleinrichtung geregelt wird.

31. Anlage nach Anspruch 15, wobei die Alterungskammer mit längslaufenden Führungen (15) ausgerüstet ist, um die Einheit mit dem plattenartigen, scheibenartigen oder modularelementartigen, auf mehreren Ebenen positionierten Materialcluster aufzunehmen.

32. Anlage nach Anspruch 14, bei der eine Vorrichtung zumindest für die Förderung und Beladung von plattenartigen, scheibenartigen oder modularelementartigen Ziersteinen existiert, umfassend: einen Rahmen (50) zum Tragen und Aufnehmen eines Cluster (7) von zu bearbeitenden plattenartigen, scheibenartigen (1) oder modularelementartigen Materialien, **dadurch gekennzeichnet, dass** er zumindest eine geschlossene Struktur (50, 54, 57) aufweist, welche die Seitenflächenkanten (55) besagter zu bearbeitender Materialien umschließt, wobei mehrere Formationen von wenigstens drei oder mehr Fingern (53, 58) auf der Innenseite von besagter geschlossener Form vorgesehen sind, welche auf einer Linie angeordnet und in besagter geschlossener Form nach innen gerichtet sind, um basierend auf dem Oberflächenbereich des zu behandelnden Materials einen konstanten und vorbestimmten Abstand zwischen zwei benachbarten Platten, Scheiben (1) oder modularen Elementen, welche auf besagter Vorrichtung zwischen den Fingern in Position gehalten werden, festzulegen.

33. Anlage nach Anspruch 32, wobei die Anordnung der Platten, Scheiben oder modularen Elemente in der Vorrichtung in einer subvertikalen oder vertikalen Richtung erfolgt.

34. Anlage nach Anspruch 33, wobei besagte geschlossene Struktur der Vorrichtung wenigstens aus einem oberen Arm (57) mit Fingern (58) gebildet ist, welche mit entsprechenden Fingern (53) auf den Trägern (54) des Rahmens (50) fluchten, für das Aufnehmen und die Handhabung der Einheit.

35. Anlage nach Anspruch 33, wobei die Handhabung des Beladens und Entladens der Einheit in einer Materialhandhabungsstation (3) erfolgt und wobei diese eine Abstandhalter-Vorrichtung (51, 52) für besagte, während der Belade-/Entladeschritte mit der offenen Vorrichtung eingestellte Materialien aufweist.

36. Anlage nach Anspruch 35, wobei die Abstandhalter-Vorrichtung aus einer Vielzahl von Zähnen (52) gebildet wird und mit Aktuator-Mitteln (56) vermittels eines einzelnen Kammes (51) oder sogar vermittels Aktuator-Mitteln mit Einzelzähnen oder in Paaren betrieben wird.

37. Anlage nach Anspruch 33, wobei der Rahmen (50) der Förder- und Ladevorrichtung auf beiden Seiten untere Öffnungen aufweist für den Durchlass von Gabelstücken (61) eines Fördergerätes (6) beim Aufnehmen.

## Revendications

1. Procédé pour consolider des pierres ornementales en forme de plaques, en forme de tranches ou en forme d'éléments modulaires comprenant: l'imprégnation au moyen de la pression créée dans l'environnement de traitement avec une solution de silicate alcalin dans laquelle le matériau en cours de traitement est plongé pendant une durée suffisante pour une pénétration complète dans des fissures et des micro-porosités de la surface de celui-ci ; **caractérisé en ce qu'**il se compose des étapes suivantes :
- un traitement préliminaire du matériau par aspiration ;
- un prolongement de l'étape de traitement préliminaire pendant une durée suffisante, après que la valeur de vide souhaitée a été atteinte, pour extraire des gaz, des vapeurs et des poudres existant dans lesdites fissures et lesdites micro-porosités ;
- une injection de la solution d'imprégnation dans la même chambre de traitement préliminaire sous vide, avec une solution de silicate alcalin adaptée pour le lithotype de la roche en cours de traitement et pour l'objet mécanique esthétique visé par l'imprégnation ;
- la conservation de la chambre de traitement sous vide au cours de l'injection ;
- une étape d'imprégnation étant maintenue pendant une durée suffisante pour que la solution pénètre lesdites fissures et micro-porosités toujours sous vide.

2. Procédé selon la revendication 1, dans lequel l'étape de traitement préliminaire a lieu avec une pression absolue inférieure à 2 mbar, de manière préférée inférieure à 0,2 - 0,3 mbar.

3. Procédé selon la revendication 1, dans lequel l'étape d'injection a lieu avec une pression absolue inférieure à 300 mbar.

4. Procédé selon la revendication 3, dans lequel l'étape d'injection a lieu avec une pression absolue comprise entre 10 et 100 mbar.

5. Procédé selon la revendication 1, dans lequel l'étape d'imprégnation a lieu à une pression absolue proche du niveau de pression de vapeur de la solution d'imprégnation utilisée, cependant comprise entre 10 et 50 mbar.

6. Procédé selon la revendication 1, dans lequel après l'imprégnation une étape de séchage du matériau traité est effectuée, à une température dépassant légèrement la température ambiante pour une durée d'au moins une journée.

7. Procédé selon la revendication 1, dans lequel le niveau de solution d'imprégnation est maintenu dans la chambre d'imprégnation juste au-dessous du bord supérieur du matériau traité.

8. Procédé selon la revendication 1, comportant plusieurs imprégnations consécutives ou intercalées dans différentes étapes d'usinage des matériaux pierreux en forme de plaques, en forme de tranches ou en forme d'éléments modulaires.

9. Procédé selon la revendication 8, dans lequel plusieurs imprégnations sont effectuées dans différents buts de consolidation ou d'embellissement esthétique utilisant des solutions de silicate alcalin avec différentes compositions dans les différentes imprégnations.

10. Procédé selon la revendication 1, dans lequel la solution de silicate alcalin pour l'application en tant que fluide d'imprégnation comprend :
A) du silicate de sodium (avec un rapport SiO₂/Na₂O compris entre 1,8 et 3,8, de manière préférée compris entre 3,0 et 3,5, et des solides compris entre 25 et 50% en poids, de manière préférée compris entre 30 et 40%) dans le pourcentage compris entre 40 et 80% en poids ;
B) du silicate de potassium (avec un rapport SiO₂/K₂O compris entre 0,6 et 2,2, de manière préférée compris entre 0,6 et 1,0, et des solides compris entre 35 et 50% en poids, de manière préférée compris entre 45 et 50%) dans le pourcentage compris entre 20 et 50% en poids ;
C) du H₂O dans le pourcentage compris entre 0 et 25% en poids.

11. Procédé selon la revendication 1, dans lequel la solution de silicate alcalin, pour l'application en tant que fluide d'imprégnation, comprend : du silicate de potassium (avec un rapport SiO₂/K₂O compris entre 0,6 et 1, de manière préférée de 0,6, et des solides compris entre 40 et 50% en poids, de manière préférée compris entre 45 et 50%) dans le pourcentage compris entre 80 et 100% en poids et de l'eau comprise entre 0 et 20%.

12. Procédé selon la revendication 1, dans lequel la solution de silicate alcalin, pour l'application en tant que fluide d'imprégnation, comprend : du silicate de sodium (avec un rapport SiO₂/Na₂O compris entre 3,2 et 4,0, et des solides compris entre 30 et 35% en poids) dans le pourcentage de 100% en poids.

13. Procédé selon la revendication 1, dans lequel la solution de silicate alcalin, pour l'application en tant que fluide d'imprégnation, comprend : du silicate de potassium avec un rapport SiO₂/K₂O compris entre 0,6 et 1, et des solides compris entre 40 et 50% en poids.

14. Usine pour l'application du procédé de consolidation de pierres ornementales en forme de plaques, en forme de tranches (1) ou en forme d'éléments modulaires, selon les revendications 1 à 13 d'une manière industrielle avec une production et un rendement économiquement rentables, **caractérisée en ce qu'**elle comprend :
- une station (3) de chargement/déchargement des matériaux en cours d'usinage comprenant au moins un dispositif (5) de manipulation pour ramasser et positionner sur un dispositif (50) de manipulation et de rangement lesdits matériaux ; au moins un convoyeur (6) pour ramasser et manipuler l'amas (7) de matériau logé sur le dispositif depuis la station de chargement/déchargement en direction d'une station (9) de traitement préliminaire et d'imprégnation ;
- au moins une chambre (8) sous vide dans laquelle ledit amas (7) est logé au cours des étapes de traitement ; au moins un ou plusieurs moyens d'extraction de l'air de la chambre sous vide ; au moins un ou plusieurs dispositifs pour alimenter et extraire la solution de fluide d'imprégnation dans la chambre sous vide.

15. Usine selon la revendication 14, comprenant au moins une station de séchage équipée d'une ou plusieurs chambres à température contrôlée pour le séchage et le durcissement complets de l'agent d'imprégnation.

16. Usine selon la revendication 14, dans laquelle le convoyeur (6) est doté de longues fourches (61) pour saisir le dispositif dans la direction de la longueur desdits matériaux (1).

17. Usine selon la revendication 14, dans laquelle la station (3) de chargement/déchargement est précédée d'une chambre (4) de lavage et/ou de séchage du matériau (1) à traiter.

18. Usine selon la revendication 14, dans laquelle la chambre (8) sous vide a une configuration parallélépipédique et le chargement/déchargement sur une base latérale inférieure ; cette base est fermée par un couvercle (10) au cours du traitement.

19. Usine selon la revendication 14, dans laquelle la chambre (8) sous vide est connectée à l'équipement de vide dans la partie supérieure.

20. Usine selon la revendication 14, dans laquelle la chambre (8) sous vide est connectée à l'équipement d'injection de la solution de fluide d'imprégnation depuis la base.

21. Usine selon la revendication 14, dans laquelle le tube (20) de connexion de l'équipement de vide est intercepté par une soupape (21) solénoïde de sectionnement, pour vérifier et contrôler l'alimentation de vide.

22. Usine selon la revendication 14, dans laquelle le tube (25) de connexion de l'équipement d'injection d'imprégnation est intercepté par une soupape (27) solénoïde de sectionnement, pour vérifier et contrôler ladite alimentation de fluide d'imprégnation.

23. Usine selon la revendication 14, dans laquelle la chambre (8) sous vide est équipée d'un dispositif de drainage de fluide d'imprégnation à la fin de l'imprégnation.

24. Usine selon la revendication 23, dans laquelle la base (24) de la chambre sous vide est en forme de V.

25. Usine selon la revendication 14, dans laquelle les dispositifs d'alimentation et d'extraction de solution de fluide d'imprégnation dans la chambre sous vide comprennent au moins un dispositif (26) de filtrage pour les impuretés de la solution d'imprégnation.

26. Usine selon la revendication 14, dans laquelle la chambre (8) sous vide est dotée d'un dispositif (32) de lavage à la fin de l'étape d'imprégnation des résidus de solution de fluide d'imprégnation.

27. Usine selon la revendication 26, dans laquelle le dispositif de lavage est composé de tubes (32) pour acheminer et pulvériser l'eau de lavage dans la chambre (8) sous vide.

28. Usine selon la revendication 14, dans laquelle les dispositifs pour l'alimentation et l'extraction de la solution de fluide d'imprégnation dans la chambre sous vide comprennent au moins un réservoir (29) de stockage de solution.

29. Usine selon la revendication 21, dans laquelle ladite soupape (21) solénoïde de sectionnement sur le tube (20) de vide est commandée par un équipement de commande logique pour maintenir le degré de vide souhaité.

30. Usine selon la revendication 22, dans laquelle ladite soupape (27) solénoïde de sectionnement sur le tube du tube (25) d'entrée d'imprégnation est commandée par un équipement de commande logique.

31. Usine selon la revendication 15, dans laquelle la chambre de séchage est équipée de guides longitudinaux (15) pour loger le dispositif avec l'amas de matériau en forme de plaques, en forme de tranches ou en forme d'éléments modulaires positionné sur davantage de plans.

32. Usine selon la revendication 14, dans laquelle se trouve un dispositif au moins pour la manipulation et le rangement de pierres ornementales en forme de plaques, en forme de tranches ou en forme d'éléments modulaires, comprenant : un cadre (50) pour supporter et saisir un amas (7) de matériaux en forme de plaques, en forme de tranches ou en forme d'éléments modulaires en cours d'usinage ; **caractérisée en ce qu'**elle est dotée d'au moins une structure fermée (50, 54, 57) entourant les bords latéraux (55) de surface desdits matériaux en cours d'usinage dans laquelle plusieurs formations d'au moins trois doigts (53, 58) ou plus sont proposées sur le côté intérieur de ladite forme fermée, alignés et orientés vers l'intérieur de ladite forme fermée, pour définir une distance constante et prédéterminée, en fonction de l'aire de la surface du matériau en cours de traitement, entre deux éléments en plaques, en tranches (1) ou modulaires maintenus en position entre les doigts sur ledit dispositif.

33. Usine selon la revendication 32, dans laquelle la disposition des éléments en plaques, en tranches ou modulaires dans le dispositif est dans une direction sous-verticale ou verticale.

34. Usine selon la revendication 33, dans laquelle ladite structure fermée du dispositif est composée d'au moins un bras supérieur (57) doté de doigts (58) alignés avec des doigts correspondants (53) sur la largeur (54) du cadre (50) pour la saisie et la manipulation du dispositif.

35. Usine selon la revendication 33, dans laquelle la manipulation de chargement/déchargement de dispositif est effectuée dans une station (3) de manipulation de matériau et qui est dotée d'un dispositif (51, 52) d'écartement desdits matériaux interposés au cours des étapes de chargement/déchargement avec le dispositif ouvert.

36. Usine selon la revendication 35, dans laquelle le dispositif d'écartement est composé d'une pluralité de dents (52) et est actionné par un moyen (56) d'actionnement au moyen d'un seul peigne (51) ou même au moyen d'un moyen d'actionnement à une seule dent ou par paires.

37. Usine selon la revendication 33, dans laquelle le cadre (50) du dispositif de manipulation et de rangement est doté d'ouvertures inférieures pour le passage de ramassage par des fourches (61) d'un convoyeur (6) sur les deux côtés.
